# EUROPÄISCHE PATENTSCHRIFT

(11) **EP 1 776 702 B1**
(45) Veröffentlichungstag und Bekanntmachung des Hinweises auf die Patenterteilung: **02.01.2008**
(21) Anmeldenummer: 05766806.3
(22) Anmeldetag: 11.07.2005
(51) Int. Cl.: G11B 33/04

(54) **VORRICHTUNG ZUM AUFFINDEN VON IN HÜLLEN UNTERGEBRACHTEN DIGITALEN DATENTRÄGERN**
DEVICE FOR LOCALIZING DIGITAL DATA CARRIERS THAT ARE PLACED IN SLEEVES
DISPOSITIF DE REPERAGE DE SUPPORTS DE DONNEES PLACES DANS DES POCHETTES

(30) Priorität: 12.08.2004 EP 04103905
(43) Veröffentlichungstag der Anmeldung: 25.04.2007
(73) Patentinhaber: Chappuis, Michel, 3423 Ersigen (CH)
(72) Erfinder: Chappuis, Michel, 3423 Ersigen (CH)
(74) Vertreter: Scheuzger, Beat Otto
(86) Internationale Anmeldenummer: PCT/EP2005/053307
(87) Internationale Veröffentlichungsnummer: WO 2006/018356

(56) Entgegenhaltungen:
- EP-A- 1 168 351
- EP-A1- 0 658 901
- WO-A1-00/45391
- WO-A1-02/07574
- WO-A2-20/04028905
- DE-A1- 4 121 549
- DE-A1- 19 800 814
- DE-U- 20 218 690
- DE-U- 29 718 887
- GB-A- 2 318 343
- US-A- 4 762 225
- US-B1- 6 202 861

## Beschreibung

Die vorliegende Erfindung bezieht sich auf eine Vorrichtung zum Auffinden von in Hüllen untergebrachten digitalen Datenträgern, welche Hülle jeweils aus einem blattförmigen Rückenteil und einem blattförmigen Deckteil gebildet sind, deren Randbereiche mit Ausnahme einer Seite miteinander verbunden sind und jeweils eine Tasche für die Aufnahme eines digitalen Datenträgers bilden, wobei mehrere Taschen aneinandergereiht miteinander verbunden sind und ein Band bildet, welches vorzugsweise leporelloartig zusammenfaltbar ist und welches in die Vorrichtung einsetzbar ist.

Dieser Gegenstand ist aus DE 41 21 549 A bekannt.

Digitale Datenträger, beispielsweise Compactdiscs (CDs) oder Digital Versatile Discs (DVD), werden häufig in boxartigen Verpackungen auf dem Markt angeboten, deren Unterbringung viel Platz erfordert, wobei die Vorrichtungen, in welchen derartige boxartigen Verpackungen untergebracht werden können, ein schnelles Auffinden des entsprechenden Datenträgers nicht in einfacher Weise zulassen.

Für ein vereinfachtes Unterbringen von den genannten Datenträgern sind Hüllen bekannt, die aus einem blattförmigen Rückenteil und einem blattförmigen Deckteil gebildet sind, deren Randbereiche mit Ausnahme einer Seite miteinander verbunden sind und so eine Tasche für die Aufnahme eines digitalen Datenträgers bilden. Dadurch kann der entsprechende Datenträger in geschützter Weise und Platz sparend untergebracht werden, das Auffinden bereitet aber ebenfalls Schwierigkeiten.

Es sind auch Hüllen bekannt, die aneinandergereiht sind und ein Band bilden, wobei eine Reihe von Taschen gebildet wird, in welche die digitalen Datenträger untergebracht werden können. Diese bandförmig angeordneten Hüllen können Harmonika-artig zusammengefaltet sein, sie bilden in sich einen Stapel. Auch hier ist das schnelle Auffinden eines gesuchten Datenträgers nicht ganz einfach, die Stapel müssen auseinandergefaltet und wieder zusammengefaltet werden, was mit zusätzlichem Aufwand verbunden ist.

Die Aufgabe der vorliegenden Erfindung besteht darin, eine Vorrichtung zum Auffinden von in Hüllen untergebrachten digitalen Datenträgern zu schaffen, welche eine einfache Handhabung ermöglicht und mit welcher ein sehr schnelles Suchen durchführbar ist.

Erfindungsgemäss erfolgt die Lösung dieser Aufgabe dadurch, dass die Vorrichtung ein Gestell umfasst, in welchem ein erster Aufnahmebehälter für das Band, ein Ständer mit einem Umlenkelement, welches um eine im Ständer gelagerte Achse drehbar ist, und ein zweiter Aufnahmebehälter angeordnet sind, so dass das Band vom ersten Aufnahmebehälter über das Umlenkelement in den zweiten Aufnahmebehälter überführbar ist und umgekehrt.

Mit dieser Vorrichtung ist ein einfaches und schnelles Umstapeln der in Reihe hintereinander angeordneten Hüllen, die ein Band bilden, in optimaler Weise möglich. Während des Überführens des Bandes über das Umlenkelement ist eine Schnellsichtung der durchlaufenden digitalen Datenträger möglich, der gesuchte Datenträger kann sehr schnell aufgefunden werden.

Der Ständer ist in vorteilhafter Weise aus zwei flachen Profilen gebildet, welche parallel zueinander und beabstandet voneinander ausgerichtet sind und mit ihrem einen Endbereich am Gestell angebracht sind, während am anderen Endbereich die Achse gelagert ist und das Umlenkelement zwischen den beiden Profilen angeordnet ist. Dies ergibt einen sehr einfachen Aufbau der Vorrichtung.

In vorteilhafter Weise ist das Umlenkelement antreibbar, es kann handbetrieben werden, beispielsweise über eine Kurbel, es kann aber auch über einen ansteuerbaren Motor angetrieben werden.

In vorteilhafter Weise ist das Umlenkelement aus einem geraden prismatischen Körper gebildet, welcher mindestens drei ebene Oberflächen aufweist, deren Abmessungen in der Höhe und Breite im wesentlichen der Länge und Breite einer Tasche des in die Vorrichtung einsetzbaren Bandes entspricht. Mit diesem Umlenkelement kann das Band in optimaler Weise vorwärts und rückwärts bewegt werden, die Taschen liegen in optimaler Weise auf den Flächen des prismatischen Körpers auf.

Es ist auch denkbar, das Umlenkelement aus einer ebenen Platte zu bilden, deren beide Flächen eine Höhe und eine Breite aufweisen, die jeweils im wesentlichen der Länge und Breite einer Tasche des in die Vorrichtung einsetzbaren Bandes entspricht. Diese sehr einfache Ausführungsform hat jedoch den Nachteil, dass ein unruhigerer Lauf des Bandes auftritt.

In vorteilhafter Weise sind die Aufnahmebehälter vom einen Endbereich der beiden flachen Profile beabstandet zwischen den beiden flachen Profilen angebracht. Dadurch wird Platz geschaffen, um zwischen den Aufnahmebehältern und dem einen Endbereich zwischen den beiden flachen Profilen Ablagefächer anzubringen, in welchen Bänder mit darin eingesetzten Datenträgern untergebracht werden können.

Besonders geeignet für den Einsatz in die vorgängig dargestellte Vorrichtung sind Hüllen, die in bekannter Weise bandförmig aneinandergereiht sind, und welche der Aufnahme von digitalen Datenträgern dienen, die aus drei aufeinander gelegten Folien gebildet sind, welche aus einem schweissbaren Kunststoff bestehen, wobei diese Folien mit Ausnahme einer offenen Seite an den Randbereichen miteinander verschweisst sind und eine erste Tasche für die Aufnahme eines digitalen Datenträgers und eine zweite Tasche beispielsweise für die Aufnahme eines Beschriftungsschildes bilden, und diese Hüllen über eine Verbindungsstelle miteinander an der den offenen Seite benachbarten Randbereichen verbunden sind.

Üblicherweise sind diese Beschriftungsschilder gross beschriftet und mit entsprechenden Grafiken ausgestattet, so dass ein schneller Blick ermöglicht, den in der entsprechenden Hülle untergebrachten Datenträger zu erkennen.

Die die Rückseite bildende Folie kann im Bereich der offenen Seite über die beiden anderen Folien vorstehend sein. Dadurch ergibt sich ein zusätzlicher Schutz für den in die jeweilige Hülle eingesetzten Datenträger.

Zur Verbesserung der Handhabung beim Herausnehmen und Einsetzen des Datenträgers in die entsprechende Hülle kann an mindestens einer der Folien im Randbereich der offenen Seite eine Kerbe angebracht sein.

Die Hüllen können einfach hergestellt werden, indem die aufeinander gelegten Folien bandförmig ausgebildet sind und die Taschen durch entsprechend angebrachte Schweissnähte gebildet sind, so dass eine Reihe von miteinander verbundenen Taschen entsteht und dass zwischen den beiden benachbarten Schweissnähten von zwei benachbarten Taschen eine Knicknaht angebracht ist. Diese Knicknaht erlaubt in optimaler Weise eine leporelloartige Zusammenfaltung dieser Reihe.

Die einzelnen Taschen können über eine lösbare Verbindung miteinander verbunden sein. Dadurch kann in eine Reihe von Taschen eine weitere Tasche eingesetzt werden, wonach die Reihe wieder geschlossen wird, wodurch gewünschte Reihenfolgen von digitalen Datenträgern ohne Auswechslung der Datenträger in den jeweiligen Hüllen möglich wird.

Eine einfache lösbare Verbindung kann aus Laschen bestehen, die an den seitlichen Randbereichen der Taschen angebracht sind, an dessen Enden jeweils ein Teil einer Druckknopfverbindung befestigt ist, die mit dem ergänzenden Teil der Druckknopfverbindung, angebracht an der Lasche der benachbarten Tasche, in Eingriff bringbar ist.

Eine andere einfache lösbare Verbindung kann aus an den Taschen seitlich vorstehenden Streifen bestehen, wobei am einen Streifen ein Steg angebracht ist, der sich längs des Streifens erstreckt, während am anderen Streifen eine längsverlaufende Rille angebracht ist, wobei zum Verbinden von zwei benachbarten Taschen der jeweilige Steg der einen Tasche in die Rille der benachbarten Tasche einklinkbar ist.

Beide Verbindungsarten sind einfach in der Herstellung und einfach zu handhaben.

Ausführungsformen der Erfindung werden nachfolgend anhand der beiliegenden Zeichnung beispielhaft näher erläutert.

Es zeigt
Fig. 1 eine Ansicht auf eine erfindungsgemässe Vorrichtung zum Auffinden von in Hüllen untergebrachten digitalen Datenträgern;
Fig. 2 eine Schnittdarstellung entlang Linie II-II der Vorrichtung gemäss Fig. 1;
Fig. 3 eine Seitenansicht der erfindungsgemässen Vorrichtung gemäss Fig. 1;
Fig. 4 eine erfindungsgemässe Vorrichtung gemäss Fig. 1 in räumlicher Darstellung;
Fig. 5 eine Ansicht des oberen Teils einer anderen Ausführungsform der Erfindung;
Fig. 6 eine Schnittdarstellung entlang Linie VI-VI der Vorrichtung gemäss Fig. 5;
Fig. 7 eine Schnittdarstellung durch eine die Tasche bildende Hülle, welche in Bandform in die erfindungsgemässe Vorrichtung eingesetzt werden kann;
Fig. 8 eine Draufsicht auf aneinander gereihte Hüllen gemäss Fig. 7;
Fig. 9 eine Draufsicht auf eine lösbare Verbindung von aneinander gereihten Hüllen;
Fig. 10 eine Seitenansicht auf die Ausgestaltung gemäss Fig. 9;
Fig. 11 eine Draufsicht auf eine andere Ausführungsform einer lösbaren Verbindung benachbarter Hüllen;
Fig. 12 eine Seitenansicht der Ausgestaltung gemäss Fig. 11;
Fig. 13 eine vergrösserte Darstellung der lösbaren Verbindung gemäss Fig. 12;
Fig. 14 eine Ansicht von vom auf eine weitere Ausführungsform der erfindungsgemässen Vorrichtung; und
Fig. 15 eine Schnittdarstellung entlang Linie XV-XV der Vorrichtung gemäss Fig. 14.

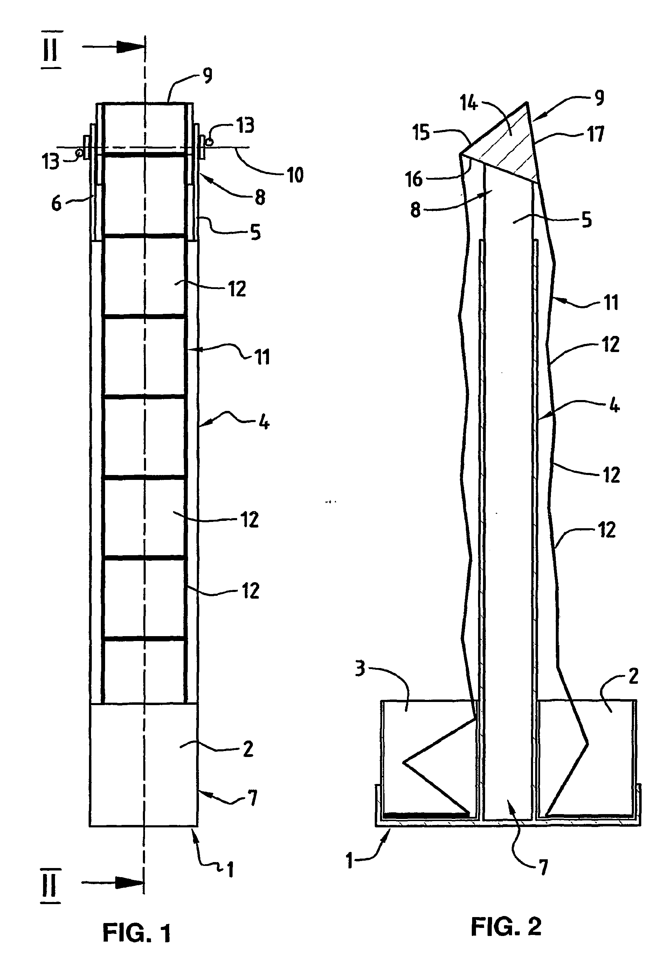

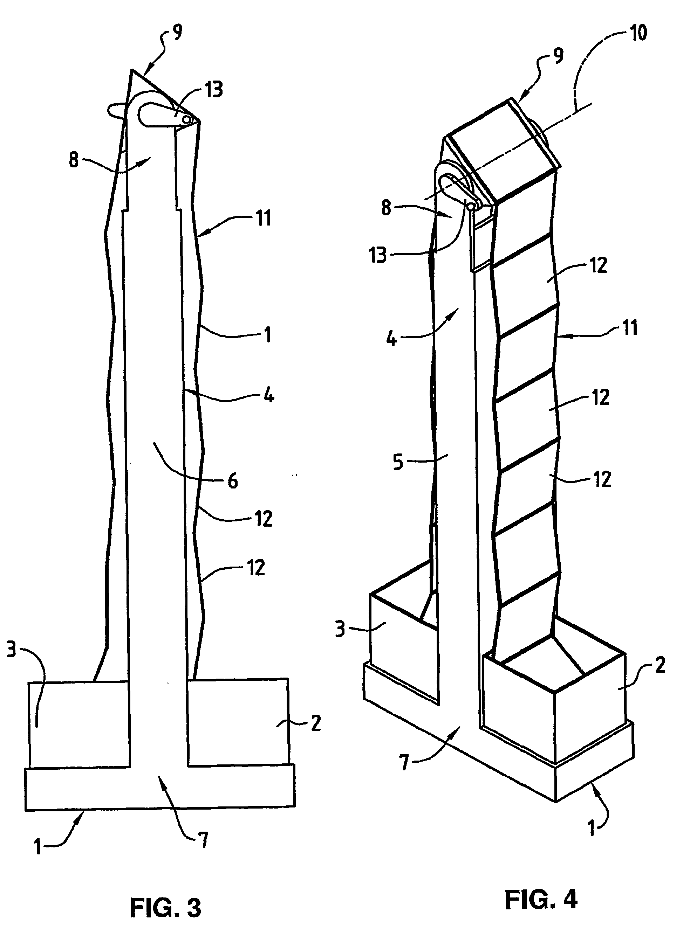

Wie aus den Fig. 1 bis 4 ersichtlich ist, besteht die Vorrichtung zum Auffinden von in Hüllen untergebrachten digitalen Datenträgern aus einem Gestell 1, in dessen unteren Bereich ein erster Aufnahmebehälter 2 und ein zweiter Aufnahmebehälter 3 angeordnet sind. Am Gestell 1 ist zudem ein Ständer 4 angebracht, der aus zwei flachen Profilen 5 und 6 gebildet ist, die mit ihrem einen Endbereich 7 am Gestell 1 befestigt sind und senkrecht darauf zu stehen kommen. Diese beiden flachen Profile 5 und 6 verlaufen parallel zueinander und sind voneinander beabstandet. Am anderen Endbereich 8 der beiden flachen Profile 5 und 6 ist zwischen diesen ein Umlenkelement 9 angebracht, das drehbar um eine Achse 10 gelagert ist.

In diese Vorrichtung kann nun ein bekanntes Band 11 eingelegt werden, das durch in Reihe hintereinander angeordnete Taschen 12 gebildet wird, wobei jeweils in eine Tasche 12 ein digitaler Datenträger eingeschoben werden kann, und die Tasche 12 jeweils die Hülle für diesen Datenträger bildet.

Dieses Band 11 mit den Taschen 12 kann, wie dies insbesondere aus Fig. 2 ersichtlich ist, leporelloartig gefaltet werden. Dadurch wird ein Stapel gebildet, der in den ersten Aufnahmebehälter 2 eingesetzt werden kann. Das obere Ende dieses Stapels kann dann über das Umlenkelement 9 gelegt werden. Durch Verdrehen dieses Umlenkelementes 9 wird das die Taschen 12 bildende Band 11 vom ersten Aufnahmebehälter 2 über das Umlenkelement 9 in den zweiten Aufnahmebehälter 3 geführt, in diesem zweiten Aufnahmebehälter 3 wird das die Taschen 12 bildende Band 11 wiederum leporelloartig zusammengefaltet. Durch Verdrehen des Umlenkelementes 9 kann somit das Band 11 beliebig hin und her bewegt werden, die in den Taschen 12 untergebrachten digitalen Datenträger sind für die Bedienerperson in optimaler Weise einsichtbar, der gesuchte Datenträger kann somit rasch aufgefunden werden und gegebenenfalls aus der entsprechenden Tasche 12 des Bandes 11 entnommen werden.

Im vorliegenden Ausführungsbeispiel ist die Achse 10 des Umlenkelementes 9 mit Handkurbeln 13 ausgestattet, welche ein einfaches Verdrehen dieses Umlenkelementes 9 und demzufolge ein Verschieben des Bandes 11 mit den Taschen 12 ermöglicht. Selbstverständlich wäre es auch denkbar, anstelle der Handkurbeln 13 einen motorisch betriebenen Antrieb einzusetzen, beispielsweise einen Elektromotor, der über ein Steuerpult antreibbar und entsprechend vorwärts bzw. rückwärts bewegbar ist.

In dem in den Fig. 1 bis 4 dargestellten Ausführungsbeispiel ist das Umlenkelement 9 aus einem geraden prismatischen Körper 14 gebildet, der drei ebene Oberflächen 15, 16 und 17 aufweist. Die Abmessungen dieser Oberflächen 15, 16 und 17 in der Höhe und Breite entsprechen im wesentlichen der Länge und Breite einer Tasche 12 des in die Vorrichtung eingesetzten Bandes 11. Beim Verdrehen dieses prismatischen Körpers 14 kommt somit jeweils eine Tasche 12 des Bandes 11 auf eine der Oberflächen 15, 16 oder 17 zu liegen. Das Band 11 wird an den zwischen den Taschen 12 liegenden freien Bereichen um die Kanten des prismatischen Körpers 14 umgelegt.

Es wäre auch denkbar, einen prismatischen Körper 14 mit mehr als drei Oberflächen vorzusehen, beispielsweise vier, wobei auch hier die jeweiligen Oberflächen der Grösse der Taschen 12 des Bandes 11 entsprechen würden.

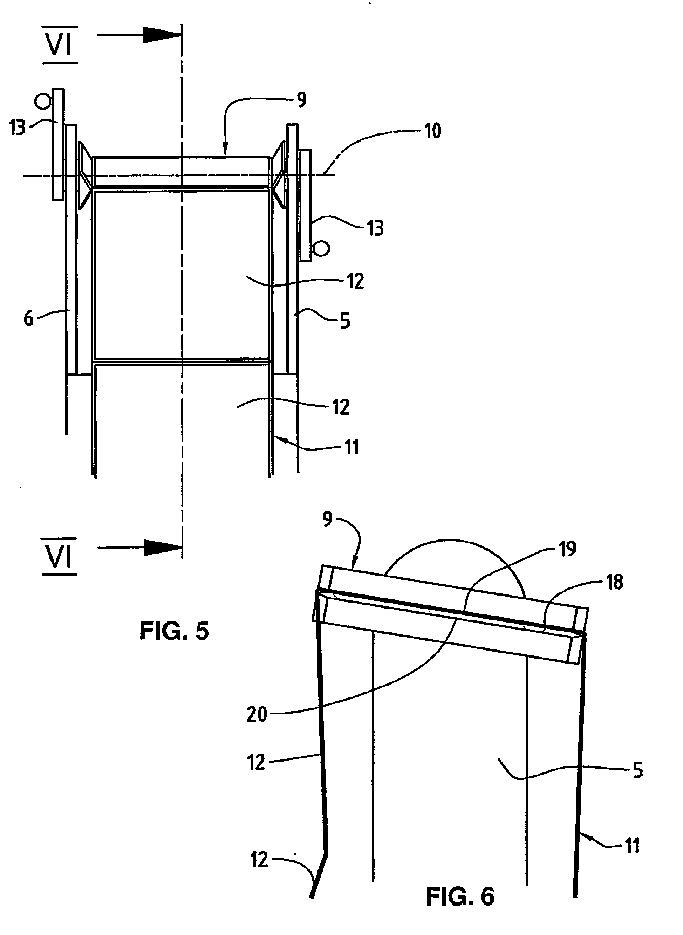

Die Fig. 5 und 6 zeigen den oberen Bereich der erfindungsgemässen Vorrichtung mit dem Umlenkelement 9, das um die Achse 10 über die Handkurbeln 13 verdrehbar ist. Hierbei ist dieses Umlenkelement 9 durch eine ebene Platte 18 gebildet, deren beide Flächen 19 und 20 ebenfalls eine Grösse aufweisen, die der Grösse einer Tasche 12 des in die Vorrichtung eingesetzten Bandes 11 entspricht. Auch mit dieser ebenen Platte 18 als Umlenkelement 9 lässt sich das Band 11 mühelos vorwärts und rückwärts bewegen.

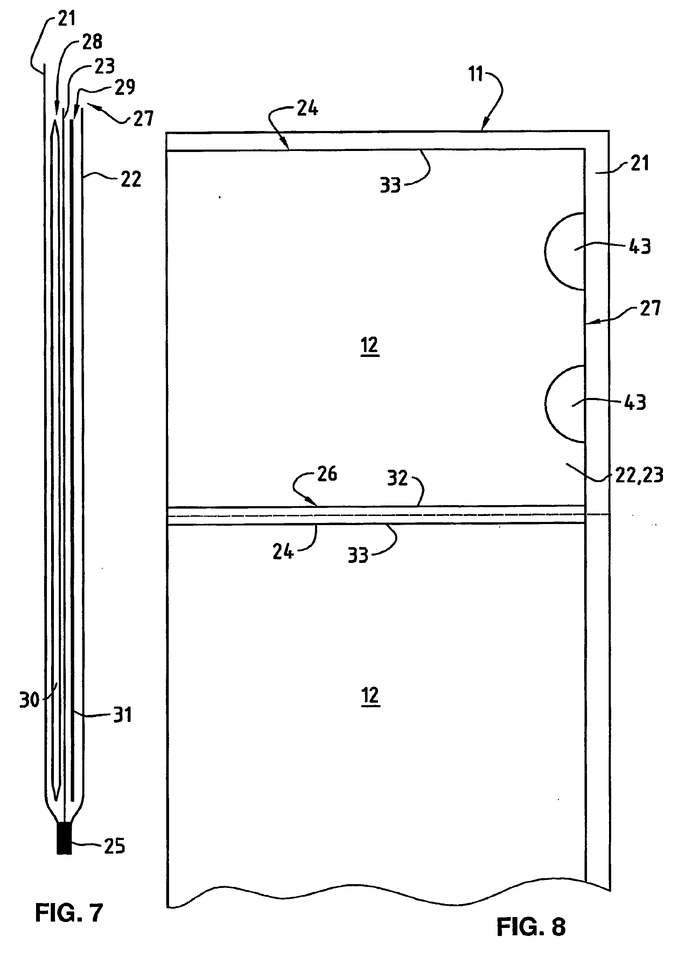

Aus den Fig. 7 und 8 ist der Aufbau eines die Taschen 12 bildenden, bekannten Bandes 11 dargestellt. Wie aus Fig. 7 ersichtlich ist, besteht eine Tasche 12 aus einer einen Rückenteil 21 bildenden Folie und einer den Deckteil 22 bildenden Folie. Zwischen Rückenteil 21 und Deckteil 22 ist eine einen Zwischenteil 23 bildende Folie eingelegt. Dieser aufeinander gelegten Folien sind an den Randbereichen 24, 25 und 26 miteinander verschweisst, wie aus Fig. 8 ersichtlich ist, wobei eine offene Seite 27 erhalten wird. Zwischen Rückteil 21 und Deckteil 22 wird somit eine erste Tasche 28 gebildet, während zwischen Deckteil 22 und Zwischenteil 23 eine zweite Tasche 29 gebildet wird. In die erste Tasche 28 lässt sich beispielsweise der digitale Datenträger 30 einschieben, während in die zweite Tasche 29 beispielsweise das zum digitalen Datenträger 30 gehörende Beschriftungsblatt 31 einsetzen lässt.

Selbstverständlich können auch Bänder verwendet werden, die weitere Zwischenteile aufweisen, wodurch mehr als zwei Taschen gebildet werden. Dies ist beispielsweise bei Doppel-CDs sinnvoll.

Der Rückenteil 21 überragt im hier dargestellten Ausführungsbeispiel im Bereich der offenen Seite 27 den Deckteil 22 und den Zwischenteil 23. Dadurch lässt sich insbesondere der digitale Datenträger 30 besser in die erste Tasche 28 einschieben und entnehmen.

Zur besseren Entnahme des digitalen Datenträgers 30 bzw. des Beschriftungsblattes 31 kann im Deckteil 22 und gegebenenfalls im Zwischenteil 23 im Bereich der offenen Seite 27 eine oder mehrere Kerben 32 angebracht werden.

Zur Herstellung des Bandes 11 mit den Taschen 12, wie diese in Fig. 8 dargestellt sind, können drei bandförmige Folien aufeinander gelegt werden und, wie dies in Fig. 8 dargestellt ist, miteinander verschweisst werden, wodurch das Band 11 mit den Taschen 12 gebildet wird. Zwischen zwei Taschen 12 ergeben sich somit zwei Schweissnähte 32 und 33, die einen gewissen Abstand voneinander haben. Zwischen diesen beiden Schweissnähten 32 und 33 wird eine Knicknaht 34 angebracht, die durch mindestens bereichsweises Prägen in die Folien gebildet wird. Dadurch wird in diesem Bereich eine dünnere Stelle erreicht, was das Umbiegen einerseits um das Umlenkelement der erfindungsgemässen Vorrichtung und andererseits eine leporelloartige Faltung erleichtert.

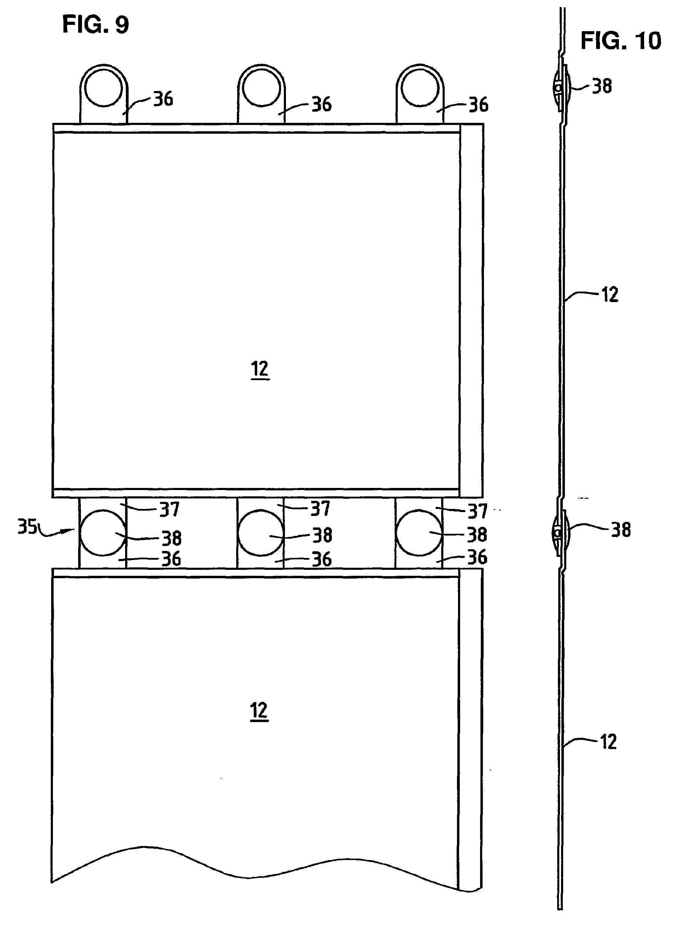

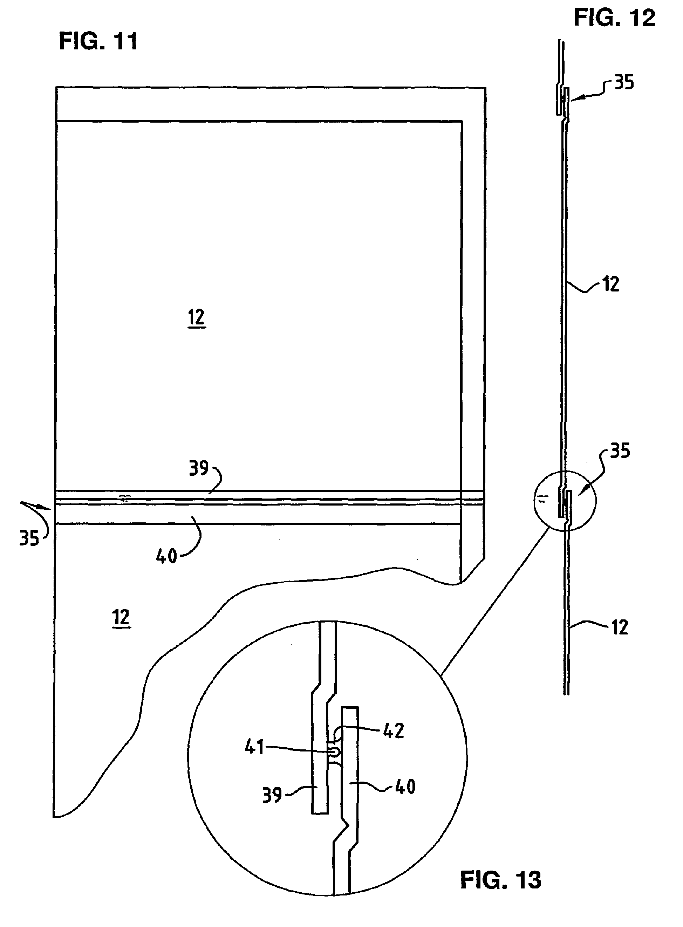

Wie aus den Fig. 9 bis 12 ersichtlich ist, können die einzelnen Taschen 12 durch eine lösbare Verbindung 35 miteinander verbunden sein. Gemäss der Ausführungsform, dargestellt in den Fig. 9 und 10 besteht diese lösbare Verbindung 35 aus Laschen 36 bzw. 37, die an den seitlichen Randbereichen der Taschen 12 angebracht sind. An den Laschen 36 ist jeweils ein Teil einer Druckknopfverbindung 38 befestigt, während an der Lasche 37 jeweils der ergänzende Teil der Druckknopfverbindung 38 angebracht ist. Diese beiden Teile der Druckknopfverbindung 38 können miteinander verbunden werden, wie dies in den Fig. 9 und 10 dargestellt ist. Eine andere Ausführungsform einer lösbaren Verbindung 35 ist in den Fig. 11 bis 13 dargestellt. Hierbei besteht die lösbare Verbindung 35 aus an den Taschen 12 seitlich vorstehenden Streifen 39 und 40, wobei am einen Streifen 39 ein Steg 41 angebracht ist, der sich längs des Streifens 39 erstreckt, während am anderen Streifen 40 eine längsverlaufende Rille 42 angebracht ist. Zum Verbinden von zwei benachbarten Taschen kann der jeweilige Steg 41 der einen Tasche 12 in die Rille 42 der benachbarten Tasche eingeklinkt werden.

Diese lösbar miteinander verbundenen Taschen 12 ermöglichen es, jeweils an einer beliebigen Stelle eines durch die Taschen 12 gebildeten Bandes 11 eine Tasche 12 einzusetzen oder herauszunehmen. Dadurch kann beispielsweise eine Sammlung von Datenträgern, die in einem Band untergebracht sind, zusätzlich ergänzt werden.

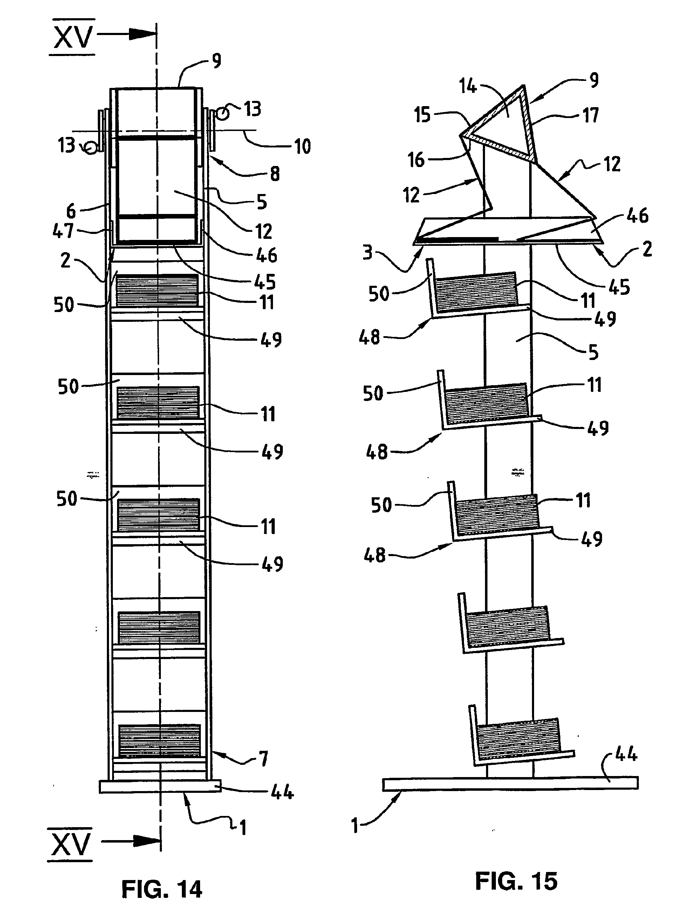

Eine weitere Ausführungsform der erfindungsgemässen Vorrichtung ist aus den Fig. 14 und 15 ersichtlich. Bei dieser Ausführungsform sind die beiden flachen Profile 5 und 6 an einer Bodenplatte 44 befestigt. Die Aufnahmebehälter 2 und 3 sind von der Bodenplatte 44 beabstandet zwischen den beiden flachen Profilen 5 und 6 angebracht, so dass sie in der Nähe des Umlenkelements 9 zu liegen kommen. Diese beiden Aufnahmebehälter 2 und 3 werden durch einen Fachboden 45 mit zwei Seitenrändern 46 und 47 gebildet. Auf die eine Seite dieses Fachbodens 45 kann nun ein leporelloartig zusammengefaltetes Band eingesetzt werden, das obere Ende dieses Bandes wird über das Umlenkelement 9 gelegt, durch Verdrehen dieses Umlenkelementes 9 lässt sich das Band auf die andere Seite des Fachbodens 45 bringen, hier wird das Band wiederum leporelloartig zusammengefaltet. Während des Überführens des Bandes mit den in den Taschen 12 enthaltenen Datenträgern von der einen Seite des Fachbodens auf die andere können diese, wie beim vorgängig beschriebenen Ausführungsbeispiel, gesichtet werden. Hierzu kann das Band vor- und zurückgedreht werden.

Zwischen dem Fachboden 45 und der Bodenplatte 44 sind zwischen den beiden flachen Profilen 5 und 6 Ablagefächer 48 eingesetzt. Diese Ablagefächer 48 umfassen jeweils ein Bodenelement 49 und eine rechtwinklig zum Bodenelement 29 angebrachte Rückwand 50. Diese Ablagefächer 48 sind hierbei so zwischen den beiden Profilen angebracht, dass die Böden 49 gegen die Rückwände 50 hin leicht geneigt nach unten ausgerichtet sind. In diesen Ablagefächern 48 können leporelloartig zusammengefaltete Bänder 11 mit darin enthaltenen Datenträgern untergebracht werden.

## Patentansprüche

1. Vorrichtung zum Auffinden von in Hüllen untergebrachten digitalen Datenträgern (30), welche Hüllen jeweils aus einem blattförmigen Rückenteil (21) und einem blattförmigen Deckteil (22) gebildet sind, deren Randbereiche (24, 25, 26) mit Ausnahme einer Seite (27) miteinander verbunden sind und jeweils eine Tasche (12) für die Aufnahme eines digitalen Datenträgers (30) bilden, wobei mehrere Taschen (12) aneinander gereiht miteinander verbunden sind und ein Band (11) bilden, welches vorzugsweise leporelloartig zusammenfaltbar ist und welches in die Vorrichtung einsetzbar ist, **dadurch gekennzeichnet, dass** die Vorrichtung ein Gestell (1) umfasst, in welchem ein erster Aufnahmebehälter (2) für das Band (11), ein Ständer (4) mit einem Umlenkelement (9), welches um eine im Ständer (4) gelagerte Achse (10) drehbar ist, und ein zweiter Aufnahmebehälter (3) angeordnet sind, so dass das Band (11) vom ersten Aufnahmebehälter (2) über das Umlenkelement (9) in den zweiten Aufnahmebehälter (3) überführbar ist und umgekehrt.

2. Vorrichtung nach Anspruch 1, **dadurch gekennzeichnet, dass** der Ständer (4) aus zwei flachen Profilen (5, 6) gebildet ist, welche parallel zueinander und beabstandet voneinander ausgerichtet sind und mit ihrem einen Endbereich (7) am Gestell (1) angebracht sind, und am anderen Endbereich (8) die Achse (10) gelagert ist und das Umlenkelement (9) zwischen den beiden Profilen (5, 6) angeordnet ist.

3. Vorrichtung nach Anspruch 1 oder 2, **dadurch gekennzeichnet, dass** das Umlenkelement (9) antreibbar ist.

4. Vorrichtung nach einem der Ansprüche 1 bis 3, **dadurch gekennzeichnet, dass** das Umlenkelement (9) aus einem geraden prismatischen Körper (14) gebildet ist, welcher mindestens drei ebene Oberflächen (15, 16, 17) aufweist, deren Abmessungen in der Höhe und Breite im wesentlichen der Länge und Breite einer Tasche (12) des in die Vorrichtung einsetzbaren Bandes (11) entspricht.

5. Vorrichtung nach einem der Ansprüche 1 bis 3, **dadurch gekennzeichnet, dass** das Umlenkelement (9) aus einer ebenen Platte (18) gebildet ist, deren beide Flächen (19, 20) eine Höhe und eine Breite aufweisen, die jeweils im wesentlichen der Länge und Breite einer Tasche (12) des in die Vorrichtung einsetzbaren Bandes (11) entspricht.

6. Vorrichtung nach einem der Ansprüche 2 bis 5, **dadurch gekennzeichnet, dass** die Aufnahmebehälter (2, 3) vom einen Endbereich (7) der beiden flachen Profile (5, 6) beabstandet zwischen den beiden flachen Profilen (5, 6) angebracht sind.

7. Vorrichtung nach Anspruch 6, **dadurch gekennzeichnet, dass** die beiden Aufnahmebehälter (2, 3) durch einen Fachboden (45) mit zwei Seitenrändern (46,47) gebildet sind.

8. Vorrichtung nach Anspruch 6 oder 7, **dadurch gekennzeichnet, dass** zwischen den Aufnahmebehältern (2, 3) und dem einen Endbereich (7) zwischen den beiden flachen Profilen (5, 6) Ablagefächer (48) angebracht sind.

## Claims

1. Device for localizing digital data carriers (30) accommodated in sleeves, which sleeves are each formed of a sheet-shaped rear part (21) and a sheet-shaped cover part (22), the edge regions (24, 25, 26) of which, with the exception of one side (27), are each connected to one another and form in each case a pocket (12) for receiving a digital data carrier (30), a multiplicity of pockets (12) being strung together, connected to one another, and forming a band (11) which is able to be folded up preferably in an Leporello-like way and is able to be placed in the device, **characterised in that** the device comprises a frame (1) in which are disposed a first container (2) for the band (11), a stand (4) with a return element (9), which is rotatable about an axis (10) borne in the stand (4), and a second container (3), so that the band (11) is transferable from the first container (2) via the return element (9) into the second container (3) and vice-versa.

2. Device according to claim 1, **characterised in that** the stand (4) is formed of two flat sections (5, 6) which are aligned parallel to one another and spaced apart from one another, and are attached to the frame (1) with their one end region (7), and the axis (10) is borne at the other end region (8), and the return element (9) is disposed between the two sections (5, 6).

3. Device according to claim 1 or 2, **characterised in that** the return element (9) is drivable.

4. Device according to one of the claims 1 to 3, **characterised in that** the return element (9) is formed by a straight prismatic body (14) having at least three flat surfaces (15, 16, 17), the measurements in height and width of which correspond substantially to the length and width of a pocket (12) of the band (11) placeable in the device.

5. Device according to one of the claims 1 to 3, **characterised in that** the return element (9) is formed by a flat plate (18) both surfaces (19, 20) of which have a height and a width that each correspond substantially to the length and width of a pocket (12) of the band (11) placeable in the device.

6. Device according to one of the claims 2 to 5, **characterised in that** the containers (2, 3) are installed between the two flat sections spaced apart from an end region (7) of the two flat sections (5, 6).

7. Device according to claim 6, **characterised in that** the two containers (2, 3) are formed by a shelf floor (45) with two side edges (46, 47).

8. Device according to claim 6 or 7, **characterised in that** installed between the two flat sections (5, 6), between the containers (2, 3) and the one end region (7), are depository compartments (48).

## Revendications

1. Dispositif pour la détection de supports de données numériques (30) logés dans des housses , housses qui sont formées respectivement d'une partie arrière en forme de feuille (21) et d'une partie de dessus en forme de feuille (22), dont les zones de bordure (24, 25, 26) à l'exception d'une face (27) sont reliées entre elles et forment respectivement une poche (12) pour le logement d'un support de données numériques (30), plusieurs poches (12) étant reliées entre elles sur une rangée et formant une bande (11) qui peut être repliée de préférence en accordéon et qui est insérable dans le dispositif **caractérisé en ce que** le dispositif comprend un châssis (1) dans lequel un premier récipient de récupération (2) pour la bande (11), un support (4) avec un élément de renvoi (9), qui est rotatif autour d'un axe (10) logé dans le support (4), et un second récipient de récupération (3) sont disposés, de sorte que la bande (11) peut être transférée du premier récipient de récupération (2) par l'élément de renvoi (9) au second récipient de récupération (3) et inversement.

2. Dispositif selon la revendication 1, **caractérisé en ce que** le support (4) est composé de deux profilés plats (5, 6) qui sont orientés parallèlement entre eux et espacés l'un de l'autre et qui sont ménagés par l'une de leur zone d'extrémité (7) sur le châssis (1) et sur l'autre zone d'extrémité (8) est logé l'axe (10) et l'élément de renvoi (9) est disposé entre les deux profilés (5, 6).

3. Dispositif selon la revendication 1 ou 2, **caractérisé en ce que** l'élément de renvoi (9) peut être entraîné.

4. Dispositif selon l'une des revendications 1 à 3, **caractérisé en ce que** l'élément de renvoi (9) se compose d'un corps (14) droit prismatique qui présente au moins trois surface planes (15, 16, 17) dont les dimensions en hauteur et en largeur correspondent sensiblement à la longueur et à la largeur d'une poche (12) de la bande (11) insérable dans le dispositif.

5. Dispositif selon l'une des revendications 1 à 3, **caractérisé en ce que** l'élément de renvoi (9) se compose d'une plaque plane (18) dont les deux surfaces (19, 20) présentent une hauteur et une largeur qui correspondent sensiblement à la longueur et à la largeur d'une poche (12) de la bande (11) insérable dans le dispositif.

6. Dispositif selon l'une des revendications 2 à 5, **caractérisé en ce que** les récipients de réception (2, 3) sont placés à distance d'une zone d'extrémité (7) des deux profilés plats (5, 6) entre les deux profilés plats (5, 6).

7. Dispositif selon la revendication 6, **caractérisé en ce que** les deux récipients de réception (2, 3) sont formés par un fond compartimenté (45) avec deux bords latéraux (46, 47).

8. Dispositif selon la revendication 6 ou 7, **caractérisé en ce qu'**entre les deux récipients de réception (2, 3) et la zone d'extrémité (7), sont ménagés des compartiments de desserte (48) entre les deux profilés plats (5, 6).
